# EUROPEAN PATENT APPLICATION

(11) **EP 0 910 191 A1**
(43) Date of publication of application: **21.04.1999**
(21) Application number: 98911174.5
(22) Date of filing: 02.04.1998
(51) Int. Cl.: H04L 5/16, H04B 1/44, H04B 1/54

(54) **RADIO COMMUNICATION EQUIPMENT**

(30) Priority: 04.04.1997 JP 102710/97
(71) Applicant: MATSUSHITA ELECTRIC INDUSTRIAL CO., LTD, Kadoma-shi, Osaka 571-0000 (JP)
(72) Inventor: KITADE, Takashi, Kanagawa 239-0847 (JP); MIYA, Kazuyuki, Kanagawa 215-0021 (JP); HOMMA, Kouichi, Kanagawa 226-0015 (JP)
(74) Representative: Grünecker, Kinkeldey, Stockmair & Schwanhäusser Anwaltssozietät
(86) International application number: JP9801523
(87) International publication number: WO9845979

(57) **Abstract**

Radio communication equipment which performs radio communication by the TDD system, wherein a starting timing signal indicating the leading sign of a random transmission-reception slot pattern is transmitted to a random transmission-reception generating device from a starting timing recognizing device and the generating device randomly selects transmission or reception to transfer the selected transmission or reception mode to a slot controller. The slot controller randomizes the frequency in synchronism with the turning on/off period of transmission by controlling a framing device and a transmission/reception change-over switch in accordance with a randomly selected transmission or reception slot.

## Description

### Technical Field

The present invention relates to a radio communication apparatus which performs communication by TDD (Time Division Duplex) system and a cellular system provided with a base station and mobile stations composed of the radio communication apparatus.

### Background Art

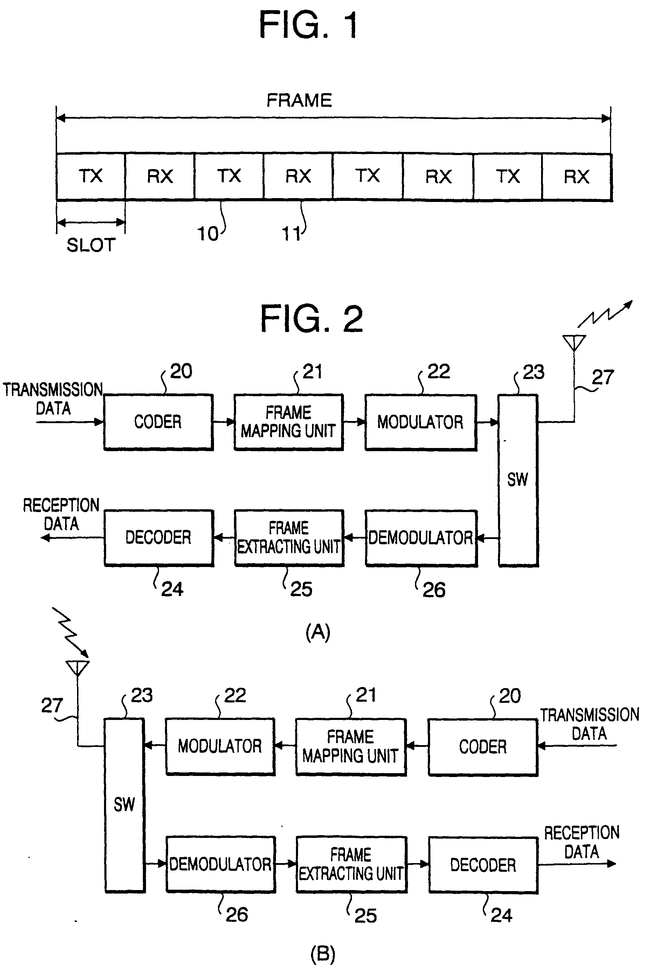

As has been called a ping-pong system, the TDD communication is a system communication which is carried out with transmission and receiving time-divided on the same radio frequency band. FIG.1 shows an example of a frame format of a communication channel in the TDD system. In FIG.1, TX10 means a transmission slot, and RX11 is a reception slot, wherein a group of TX10 or RX11 is called a "slot" , and a plurality of slots are called a "frame"

FIG.2 shows a construction of the conventional TDD communication apparatus. One-to-one communication is carried out by an apparatus shown in FIG.2(A) and an apparatus shown in FIG.2(B). The transmission side provided in the TDD communication apparatus comprises a coder 20 which performs error correcting for transmission data, an frame mapping unit 21 for framing the coded data in frame unit, a modulator 22 for modulating the framed data, a switch 23 for switching transmission and receiving, and an antenna 27 for radiating the modulated data in a state of radio signals. Furthermore, the receiving side provided in the TDD communication apparatus comprises an antenna 27 for receiving radio signals, a switch 23 for switching transmission and receiving, a demodulator 26 for demodulating the received data, an frame extract unit 25 for extracting the framed data, and a decoder 24 for performing an error correction and decoding the data.

A description is given of the actions of the TDD communication apparatus constructed as described above.

In the case of transmitting, transmission data is subjected to error correction by the coder 20 and inputted into the frame mapping unit 21. The TDD communication is constructed so as to appear the transmission slot and reception slot alternately as shown in FIG.1. The frame mapping unit 21 assigns transmission data to the transmission slot and assembles the transmission data in frame unit. After the assembled data in frame unit is modulated by the modulator 22, and the modulated data is radiated from the antenna 27 through the switch 23 in a state of radio signals. The switch 23 is constructed so that the transmission and receiving is switched over in synchronization with frame format.

In the case of receiving , the transmission signal received by the antenna 27 is inputted into the demodulator 26 through the switch 23. The data demodulated by the demodulator 26 is deframed to the format of the original data by the frame extract unit 25 after the received data was subjected to error correction by the demodulator 24, and the demodulator 24 output the demodulated data as received data.

However, in the abovementioned conventional TDD communication apparatus, since the transmission and reception slots are alternately repeated in compliance with a fixed rule, a peak spectrum appear at the frequency corresponding to the ON/OFF cycle of transmission. Although there is no problem since transmission power is suppressed to some degree in the conventional communication apparatus, there is a fear that hearing aids and other electronic devices are adversely influenced in a case where transmission is carried out with the transmission power further increased.

### Disclosure of Invention

The present invention was developed in view of the abovementioned situations, and it is therefore an object of the invention to provide a radio communication apparatus and cellular system by which hearing aids and/or electronic devices are not adversely influenced, even with the transmission power of the communication apparatus further increased than that of the conventional apparatus, by whitening the peak spectrum appeared at the frequency corresponding to the ON/OFF cycle of transmission in the TDD communication.

Present invention provides a radio communication apparatus for performing radio communication in the TDD system which includes a transmission section for transmitting the radio signals in the duration of transmission slots; a receiving section for receiving the radio signals in the duration of reception slots; a switching section for switching the transmission section and receiving section according to the transmission slot and reception slot; and a control section for suppressing a peak spectrum generated at the frequency corresponding to the transmission and receiving cycle by controlling the order of transmission slot and reception slot.

Furthermore, the present invention provides a radio communication method and radio communication apparatus which carry out communication by randomizing the repeating pattern of transmission and receiving, and by time-dividing the same radio frequency band in compliance with the random pattern.

According to the invention, it is possible to whiten the peak spectrum which is generated at the frequency corresponding to the ON/OFF cycles of transmission, wherein even though the transmission power is further increased than that of the conventional one, it is possible to use a communication apparatus without any erroneous operation without making any countermeasure in hearing aids and/or electronic devices, etc.

Furthermore, the present invention provides a radio communication method and a radio communication apparatus which carry out communication by randomizing the slot length of transmission and receiving and by time-dividing the same radio frequency band with the transmission and reception slots, the slot length of which is randomized.

According to the invention, since the slot length is made uneven, the repeating frequency of transmission and receiving is randomized, and it is advantageous since the guard bit can be saved.

### Brief Description of Drawings

FIG.1 shows a frame format of a conventional TDD communication apparatus,
FIG.2 is a block diagram of the conventional TDD communication apparatus,
FIG.3 is a block diagram of a TDD communication apparatus according to a first preferred embodiment of the invention,
FIG.4 is a TDD frame format according to the first preferred embodiment of the invention,
FIG.5 is a block diagram of the TDD communication apparatus according to a second preferred embodiment of the invention,
FIG.6 is a TDD frame format according to the second preferred embodiment of the invention,
FIG.7 is a block diagram of the TDD communication apparatus according to a third preferred embodiment of the invention,
FIG.8 is a block diagram of the TDD communication apparatus according to the third preferred embodiment of the invention,
FIG.9 is a view showing frequency components when the conventional TDD communication apparatus is used and those when a communication apparatus according to the first and second preferred embodiments is used,
FIG.10 is a conceptual view of a cellular system according to a fourth preferred embodiment of the invention, and
FIG.11 is a frame construction view according to a fifth preferred embodiment.

### Best Mode for Carrying Out the Invention

Hereinafter, a description is given of embodiments of the invention with reference to the accompanying drawings.

### (First embodiment)

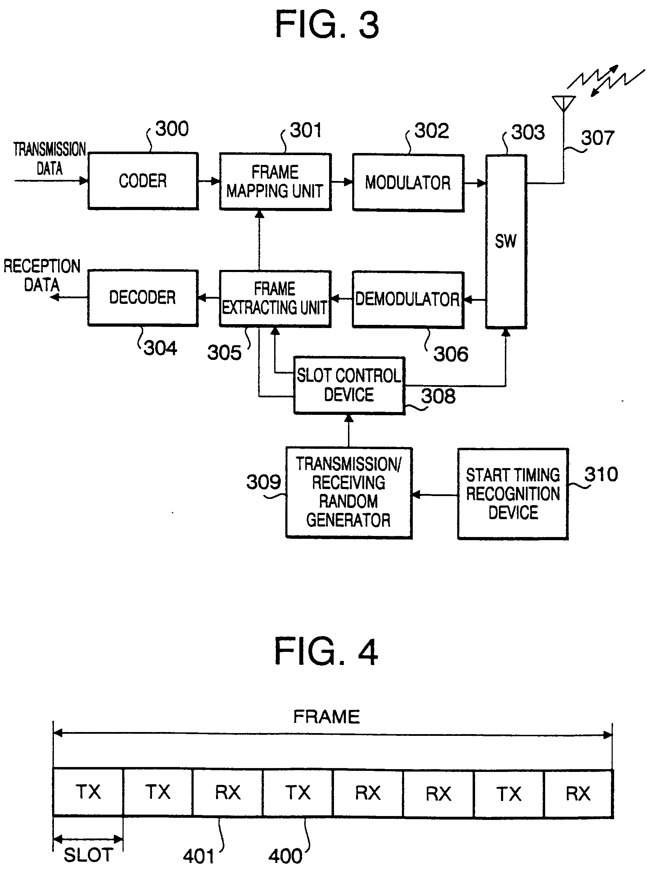

FIG.3 shows a block diagram of a TDD communication apparatus according to the first preferred embodiment of the invention. The transmission side provided in the TDD communication apparatus includes a coder 300 which code transmission data and add error correction data to coded transmission data, a frame mapping unit 301 for assembling the coded transmission data in frame unit, a modulator 302 for modulating the assembled transmission data in frame unit, a switch 303 for switching over transmission and receiving, and an antenna 307 for transmitting the modulated radio signals. Furthermore, the receiving side provided in the TDD communication apparatus includes an antenna 307 for receiving radio signals, a switch 303 for switching the transmission and receiving, a demodulator 306 for demodulating the received modulated radio signals through the switch 303, a frame extract unit 305 for extracting the framed data to original data with original format, and a decoder 304 for decoding the received data take out from the frame data and carrying out error correction. Furthermore, the switch 303 and antenna 307 are concurrently used in both the transmission side and receiving side.

Furthermore, the TDD communication apparatus is provided with a transmission/receiving random generator 309 for selecting transmission or receiving at random, a start timing recognition device 310 for indicating the top (start timing) of a random pattern to the transmission/receiving random generator 309, and a slot control device 308 for controlling the frame mapping unit 301 and frame extracting unit 305and switch 303 according to the random pattern for transmission and receiving.

The start timing recognition device 310 generates a start timing on the basis of the absolute time obtainable by a GPS or the like, or on the basis of the timing information, which is common to a communication partner, obtainable by a control channel or the like.

The transmission/receiving random generator 309 selects transmission or receiving at random, using a PN sequence (pseudo random sequence) reference to the start timing generated. However, since it is necessary for the PN sequence to synchronize between stations, the stations which are in communication use the same sequence.

The slot control device 308 controls the frame mapping unit 301 to control the transmission slot in the TDD frame according to the random patterns of transmission and receiving generated by the transmission/receiving random generator 309. And the slot control device 308 controls the frame extract unit 305 to control the reception slot in the TDD frame according to the random patterns of transmission and receiving.

FIG.4 shows a format of a TDD frame which is used by a TDD communication apparatus according to the preferred embodiment for communication between one-to-one stations. As shown in the same drawing, the TDD frame is formed by the transmission slot (TX) 400 and reception slot (RX) 401 which ate arranged in random, according to the random patterns of the transmission and receiving generated by the transmission/ receiving random generator 309. It is assumed that the transmission slot (TX) 400 and reception slot (RX) 401 are of a fixed length and are determined in advance between the stations.

A description is given of the actions of the first preferred embodiment constructed as described above.

In both stations (TDD communication apparatuses) which perform TDD communication, a start timing signal, which indicates the start position of random patterns of transmission and receiving, is generated by the start timing recognition device 310, and the transmission/receiving random generator 309 determines transmission or receiving at random, for example, using the PN sequence reference to the start timing signal, and instructs it to the slot control device 308.

The slot control device 308 controls the transmission slot 400 at the frame mapping unit 301 in the transmission side and the reception slot 401 at the frame extract unit 305 in the receiving side according to random patterns of transmission and receiving generated by the transmission/receiving random generator 309, so that, communication is carried out using the TDD frame in which the transmission slot 400 and reception slot 401 are arranged at random in one frame, as shown in FIG 4.

In a case where the TDD communication apparatus is set at the transmission side, the transmission data to be transmitted is coded in the coder 300 and error correction data is added to the coded data which are given to the frame mapping unit 301 to assemble a frame. The frame mapping unit 301 divides the transmission data equivalent to one frame into a plurality of transmission slots 400 and inserts the same into one frame.

Herein, the cycle of the transmission slot 400 in one frame are randomized according to the random patterns of transmission and receiving generated by the transmission/receiving random generator 309 and slot control device 308. The frame mapping unit 301 recognizes the insertion portion of transmission slots 400, which appear at random, by an instruction sent from the slot control device 308.

The modulator 302 modulate the frame data which transmission data divided are inserted into the transmission slots 200 appearing at random at the frame mapping unit 301. The data of the transmission slot is transmitted from the antenna 307 by switching the transmission and receiving on the switch 303 according to the patterns of transmission and receiving instructed from the slot control device 308 to the framers 301 and 305.

In a case where the TDD communication apparatus is set to the receiving side, the slot control device 308 is synchronized with the transmission side and switches the transmission and receiving by the switch 303 according to the same patterns of transmission and receiving, thereby inputing the received radio signal received by the antenna 307 to the demodulator 306 through the switch 303. The data demodulated by the demodulator 306 is inputted into the frame extract unit 305.

The transmission/receiving random generator 309 generates the same random patterns of transmission and receiving in synchronization with the transmission side and instructs it to the slot control device 308. Therefore, in the frame extract unit 305 controlled from the slot control device 308 on the receiving side, the slot control device 308 can recognize the position of the reception slot 401. The frame extract unit 305 picks up data for the reception slot 401 from the frame at the receiving timing instructed by the slot control device 308, and inputs the same into the decoder 304. In the decoder 304, the received data is decoded, and error correction data is added thereto. Thus, the data is outputted as the received data.

As a result, the frame format in communication which is carried out between the abovementioned TDD communication apparatuses become as shown in FIG.4 and the patterns of transmission and receiving are randomized. Therefore, the frequency corresponding to the ON/OFF cycles of transmission is also randomized.

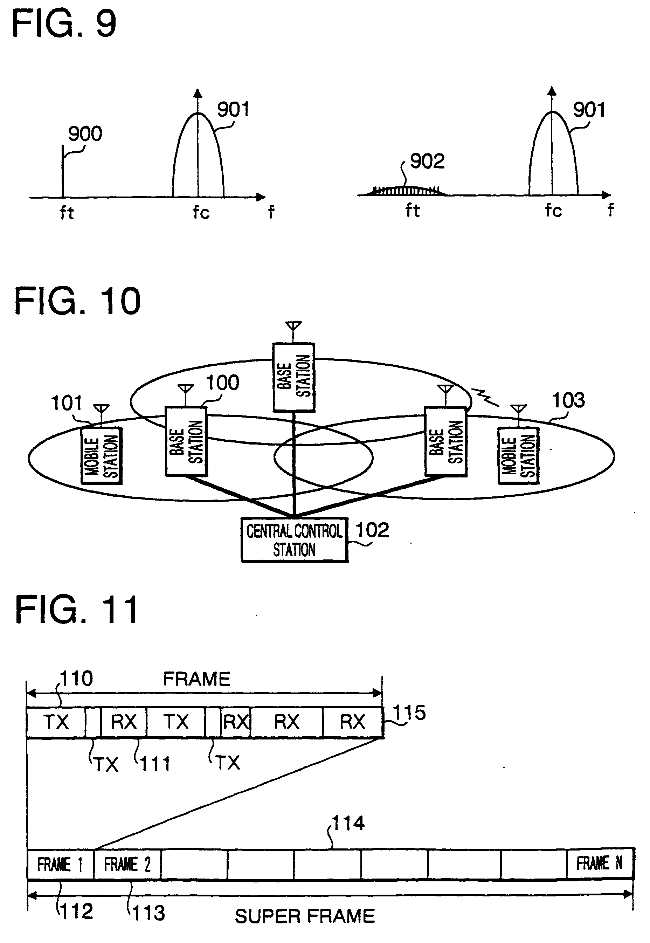

FIG.9 shows a difference in the frequency components in the case where the conventional TDD communication apparatus and a TDD communication apparatus according to the invention are used. 901 is a spectral component of modulated signals, wherein fc is a carrier frequency, and 900(ft) is a frequency component equivalent to the ON/OFF cycles of transmission.

Using the TDD communication apparatus according to this invention, since the frequency corresponding to the ON/OFF cycles of transmission is randomized and is whitened as shown at 902, wherein it is possible to suppress the level of the peak spectrum.

Therefore, even though the transmission power of a communication apparatus is increased, such an effect can be obtained, where it is possible to use the communication apparatus without producing any erroneous operations due to communication signals even though no special countermeasure such as shield, etc. is employed at a hearing aid and other electronic devices.

### (Second embodiment)

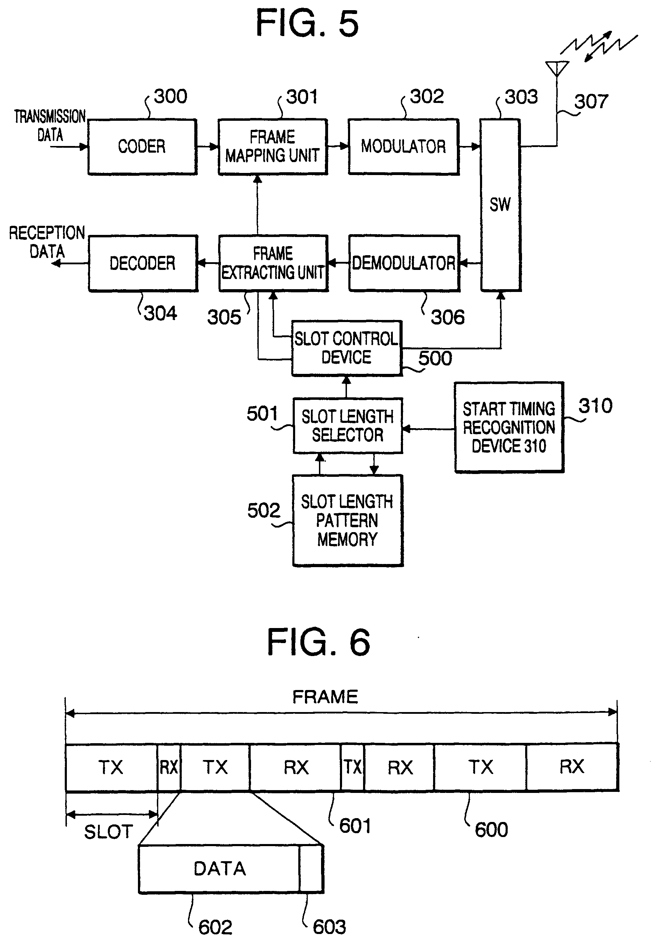

FIG.5 shows a block diagram of a TDD communication apparatus according to the second preferred embodiment of the invention. The second preferred embodiment employs a slot length selector 501 and a slot length pattern memory 502 instead of the abovementioned transmission/receiving random generator 309.

The transmission side of the TDD communication apparatus includes a coder 300 which adds error correction data to transmission data, a frame mapping unit 301 which assembles the coded data in frame unit, a modulator 302 for modulating the data, a switch 303 for switching transmission and receiving, and an antenna 307 for transmitting the modulated radio signals. Furthermore, the receiving side of the TDD communication apparatus includes an antenna 307 for receiving the modulated radio signals, a switch 303 for switching the transmission and receiving, a demodulator 306 for demodulating the received radio signals, and a frame extract unit 305 for deframing the framed data, and a decoder 304 for performing error correction with respect to the demodulated data.

Furthermore, the TDD communication apparatus is further provided with a slot control device 500, a slot length selector 501, a start timing recognition device 310, and a slot length pattern memory 502.

The slot length pattern memory 502 stores a plurality of slot length data, and those slot length data can be selected from the slot length selector 501.

The slot length selector 501 has a PN sequence generator which selects a slot length at random from the slot length pattern memory502, using the PN sequence. Furthermore, the PN sequence generator is merely a means for selecting a slot length at random, wherein another means may be utilized.

The start timing recognition device 310 generates, as in the first preferred embodiment, a start timing simultaneously with the communication partner by utilizing the absolute time given from the GPS, etc., or a control channel, etc., and gives the start timing to the slot length selector 501.

The slot control device 308 alternately instructs transmission and receiving to the frame mapping units 301 and controls the slot length of transmission slots and reception slots according to the random slot length which is given by the slot length selector 501.

FIG.6 shows a format of a TDD frame which the TDD communication apparatus according to the preferred embodiments uses for communication between one-to-one stations. As shown in the same drawing, in the TDD frame, although the transmission slot (TX) 600 and reception slot (RX) 601 are repeated, the slot length of the transmission slots 600 and reception slots 601 are changed at random in accordance with the slot length selected at random by the slot length selector 501.

A description is given of the actions of the second preferred embodiment constructed as described above.

In both stations (TDD communication apparatuses) which perform TDD communication, a start timing signal which instructs the start position of random patterns of the slot lengths is generated from the start timing recognition device 310 in synchronization with the station of a communication partner. The slot length selector 501 selects the slot lengths at random from the slot length pattern memory 502, using, for example, a PN sequence, reference to the start timing signal, and instructs it to the slot control device 500.

The slot control device 500 alternately instructs transmission and receiving to the frame mapping unit 301 and frame extracting unit 305, and at the same time the slot length selector 501 controls the slot lengths of the transmission slots 600 and reception slots 601 to the random slot lengths read out from the slot length pattern memory 502, thereby communication is carried out with a TDD frame in which the transmission slots 600 and reception slots 601 each have random slot lengths are repeated as shown in FIG.6,.

In a case where the TDD communication device is set to the transmission side, the transmission data coded by the coder 300 is inputted into the frame mapping unit 301 and is assembled in frame unit. In the frame mapping unit 301, the transmission data is divided and inserted into a plurality of transmission slots 600 in which the slot length is changed at random under controlling by the slot control device 500. Thus, frame data which is composed of transmission slots 600 each have random slot lengths is produced. As for the transmission data modulated by the modulator 302, the data in the transmission slots 600 is transmitted by the antenna 307 by the slot control device 500 switching the transmission and receiving of the switch 303 according to the random slot length pattern.

In a case where the TDD communication apparatus is set to the receiving side, the slot control device 500 is synchronized with the transmission side, and switches the transmission and receiving by using the switch 303 according to the same slot length pattern, wherein the radio signals received by the antenna 307 pass through the switch 303 and are inputted into the demodulator 306. The data demodulated by the demodulator 306 is inputted into the frame extract unit 305.

The slot length selector 501 generates a random pattern with the same slot length in synchronization with the transmission side and instructs it to the slot control device 500. Therefore, in the frame extract unit 305 in the receiving side, which is controlled by the slot control device 500, the position of the reception slot 601 can be recognized. The frame extract unit 305 picks up the data of the reception slot 601 from the frame at the receiving timing and slot length, which are instructed by the slot control device 500, and inputs it into the decoder 304. In the decoder 304, the received data is decoded, and concurrently, the decoded data is subjected to error correction. The data is outputted as the received data.

As a result, the frame format of communication carried out between the abovementioned TDD communication apparatuses becomes as shown in FIG.6, wherein although the transmission and receiving are repeated, the slot length is randomized. Therefore, the frequency corresponding to the ON/OFF cycles of transmission is also randomized.

Using a TDD communication apparatus according to the preferred embodiment, since the frequency corresponding to the ON/OFF cycles of transmission is randomized, the frequency is whitened as shown at 902 in FIG.9, wherein the level of the peak spectrum can be suppressed.

Therefore, even though the transmission power of a communication apparatus is increased, such an effect can be obtained, where it is possible to use the communication apparatus without producing any erroneous operations due to communication signals even though no special countermeasure such as a shield, etc., is employed in a hearing aid and other electronic devices.

Furthermore, in a case where TDD communication is carried out, a guard bit 603 is inserted to avoid a collision between the transmission slot 600 and reception slot 601. Since no data is stored in the guard bit 603, the guard bit is inserted halfway in the data if in the first preferred embodiment the transmission slot or the reception slot is continued. However, in a case where a communication apparatus according to this preferred embodiment is used, such an effect can be obtained, whereby when the transmission or receiving is continued, it is possible to save the guard bits.

Furthermore, it may be constructed that combination patterns of a plurality of slot lengths are prepared, in advance, in the slot length pattern memory 502, and a pattern is read out therefrom.

### (Third embodiment)

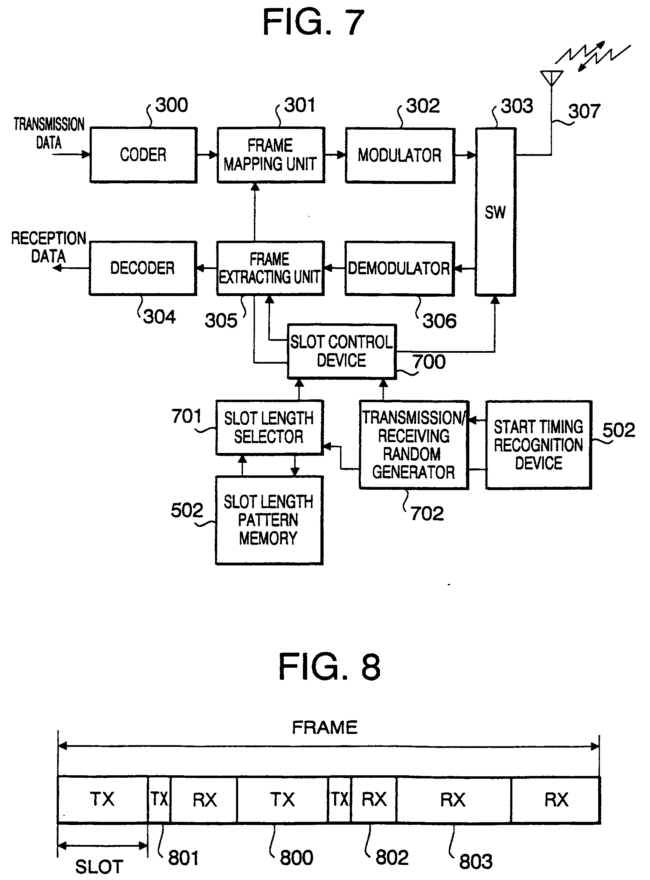

FIG.7 shows a block diagram of a TDD communication apparatus according to a third preferred embodiment of the invention. The third preferred embodiment is a combination of the idea that the arrangement of the transmission slot and reception slot, which time-divides the frame as shown in the first preferred embodiment is randomized, and the idea that the slot length of the transmission slot and reception slot is randomized as shown in the second preferred embodiment.

The transmission side of the TDD communication apparatus includes a coder 300 for adding error correction data to transmission data, a frame mapping unit 301 for framing the coded data in frame unit, a modulator 302 for modulating the data, a switch 303 for switching transmission and receiving, and an antenna 307 for transmitting the modulated radio signals. Furthermore, the receiving side of the TDD communication apparatus includes an antenna 307 for receiving the modulated radio signals, a switch 303 for switching transmission and receiving, a demodulator 306 for demodulating the received modulated radio signals, a frame extract unit 305 for deframing the framed data, and a decoder 304 for processing error correction to the demodulated data.

Furthermore, the TDD communication apparatus is provided with a slot control device 700, a slot length selector 701, a start timing recognition device 502, a transmission/receiving random generator 702, and a slot length pattern memory 502. The functions and features of these devices are the same as those shown in FIG.3 and FIG.5, which are already described above.

FIG.8 shows a format of a TDD frame which the TDD communication apparatus according to the preferred embodiment uses for communication between one-to-one stations. As shown in the same drawing, the TDD frame is such that the transmission slot 800 and reception slot 801 are arranged at random and the slot length thereof is changed at random.

A description is of the actions of the third preferred embodiment constructed as described above.

Transmission data coded by the coder 300 is inputted into the frame mapping unit 301. On the basis of the timing instructed by the start timing recognition device 502, the slot length selector 701 selects a slot length at random from the slot length pattern memory 502. The result of the selection is inputted into the slot control device 700. The transmission/receiving random generator 702 determines whether the slot length is set to the transmission slot or reception slot, and this is also inputted into the slot control device 700. These start timings are instructed by the start timing recognition device 700. Concurrently, the slot control device 700 controls the frame mapping unit 301 and frame extracting unit 505, and the transmission/receiving switch 303, wherein the transmission and receiving are carried out.

According to the third preferred embodiment, both the arrangement and slot length of the transmission slots and reception slots are randomized, wherein, even though the types of slot length patterns stored in the slot length pattern memory 502 are suppressed although it is necessary to store a considerable number of slot lengths in the memory in a case where it is attempted to randomize in the second preferred embodiment, a sufficient effect can be obtained by combinations of randomizing the transmission and receiving.

### (Fourth embodiment)

FIG.10 shows one example of a cellular system in which the TDD transmission and receiving apparatus according to the invention is employed. As shown in the same drawing, the cellular system includes a base station 100 for performing TDD communication, a mobile station 101, and a central control station 102. Furthermore, in the drawing, 103 expresses the range of a cell. The base station 100 and mobile station 101 is any one of TDD communication apparatuses according to the first, second, and third embodiments. Furthermore, if the base station is of a TDD communication apparatus defined according to the first embodiment, mobile stations will be of the same TDD communication apparatus according to the first embodiment.

A description is given of the actions of the cellular system constructed as described above.

All base stations are connected by wires to the central control station 102. The central control station 102 sends the start timing of slot length pattern to all the base stations.

In the case of the TDD communication apparatus according to the first embodiment, the timing is inputted into the start timing recognition device 310. Accordingly, in all the base stations, their slots are synchronized at the same timing basis. On the other hand, the mobile stations are synchronized with the timing transmitted from the central control station 102 to all the base stations on the basis of a GPS or the like which supplies the absolute time or through a control channel transmitted from all the base stations to the mobile stations. At this time, all the slot patterns are the same. Therefore, it becomes possible to carry out communication between a plurality of stations in the entire cellular system by TDD communication apparatuses according to the first, second, and third embodiments.

According to the embodiments of the invention as described above, since equipment for transmitting the start timing of slots from the central control station 102 to all the base stations 100, equipment by which all the mobile stations are able to recognize the start timing of slots, and a means for determining, in advance, slot patterns between all the base stations and mobile stations are provided, all the base stations are synchronized therewith in the entire cellular system, wherein the effects of the first, second, and third embodiments can be obtained between a plurality of stations.

Furthermore, similar effects can be obtained if synchronization is secured by a GPS or the like without the central control station 102 instructing the timing to the base stations 100 by wires.

### (Fifth embodiment)

FIG.11 is a frame configuration and a super frame configuration which are used in a TDD communication apparatus according to the fifth preferred embodiment of the invention.

With the first preferred embodiment, communication is carried out by using a super frame 114 having the construction as shown in FIG.11. The super frame is a frame, the cycle of which is comparatively greater than that of a frame in which several frames are assembled. The super frame 114 is constructed so that a plurality of frames 112 and 113, in which both the arrangement and slot length of the transmission slot TX and the reception slot RX similar to those used in the third preferred embodiment are randomized, are collected therein.

In a case where the slot length of transmission and receiving is constructed at random, a pattern in which the slot length of transmission and receiving differs in each of the frames 115 is constituted. A plurality of frames constructed so that the slot length pattern of transmission and receiving differs are thus prepared. These frames are incorporated in a super frame 114, the cycle of which is comparatively greater than that of the frames, wherein a super frame 114 composed of frames including these different slot patterns is constituted. Of these specified cycles (super frame), frame groups, the slot lengths of which are different from each other, are constituted and communication is carried out at the specified cycle. Thereby, the frequency corresponding to the ON/OFF cycle of transmission is randomized, and it becomes easier to control the slots, frames, and start timing.

According to the preferred embodiment of the invention, different slot lengths of transmission and receiving are assembled as frames and they are further constituted in terms of a certain specified cycle 114, and communication is carried out at the cycle, wherein such an effect can be obtained, by which the frequency corresponding to the ON/OFF cycle of transmission is randomized, and it is possible to easily control the slots, frames and start timings.

Furthermore, all the preferred embodiments can be embodied in TDMA (Time Division Multiple Access) and CDMA (Code Division Multiple Access).

### Industrial Applicability

As described above, a radio communication apparatus according to the invention is effective in randomizing the transmission and receiving cycles in the TDD system and suitable for preventing erroneous operations of peripheral devices.

## Claims

1. A radio communication apparatus for performing a radio communication in a TDD system, said radio communication apparatus comprising:
transmitting means for transmitting radio signals during a period of transmission slots;
receiving means for receiving radio signals during a period of reception slots;
means for changing over said transmitting means and said receiving means in accordance with said transmission slots and said reception slots; and
suppressing means for suppressing a peak spectrum appeared at a frequency corresponding to transmission and receiving cycles by controlling said transmission slots and said reception slots.

2. A radio communication apparatus as set forth in Claim 1, wherein said suppressing means includes randomizing means for randomizing repeating patterns of said transmission slots and said reception slots to suppress the peak spectrum.

3. A radio communication apparatus as set forth in Claim 2, wherein said randomizing means includes
means for generating random patterns which transmission slots and reception slots are repeated at random, and
means for triggering a start timing to generate the random patterns in synchronization between communication stations.

4. A radio communication apparatus as set forth in Claim 1, wherein said suppressing means includes randomizing means for randomizing slot lengths of said transmission slots and said reception slots to suppress the peak spectrum.

5. A radio communication apparatus as set forth in Claim 4, wherein said randomizing means includes
memory means for storing a plurality of types of slot length data;
means for selecting slot length data from said storing means according to the predetermined pattern; and
means for triggering a start timing to generate the pattern in synchronization between communication stations.

6. A radio communication apparatus as set forth in Claim 1, wherein
said suppressing means includes randomizing means for randomizing the repeating pattern of said transmission slots and said reception slots and randomizing the slot lengths of said transmission slots and said reception slots, so as to suppressing the peak spectrum.

7. A cellular system comprising a radio communication apparatus defined in Claim 1 in a base station disposed in each cell and mobile stations moving in each cell and synchronizing the timing of transmission slots and reception slots among all base stations.

8. A cellular system as set forth in Claim 7, further comprising a radio communication apparatus defined in Claim 2 or 3 in said base stations and said mobile stations and synchronizing the timing of transmission slots and reception slots, the repeating pattern of which is randomized.

9. A cellular system as set forth in Claim 7, further comprising a radio communication apparatus defined in Claim 4 or 5 in said base stations and said mobile stations and synchronizing, between all base stations, the timing of transmission slots and reception slots, the slot lengths of which are randomized.

10. A cellular system as set forth in Claim 7, further comprising a radio communication apparatus defined in Claim 6 in said base stations and said mobile stations and synchronizing the timing of transmission slots and reception slots, the repeating pattern and slot lengths of which are randomized.

11. A radio communication method, comprising the steps of
randomizing a repeating pattern of transmission slots and reception slots, and
performing a time division duplex communication using the transmission slots and reception slots which form the repeating pattern randomized.

12. A radio communication method, comprising the steps of
randomizing a slot length of transmission slots and reception slots, and
time-dividing a frequency band by the transmission slots and reception slots, the slot length of which is randomized.

13. A radio communication method, comprising the steps of
randomizing a slot length of transmission slots and reception slots,
randomizing a repeating pattern of the transmission slots and reception slots, the slot length of which is randomized, and
time-dividing the same radio frequency band by the transmission slots and reception slots, the slot length and repeating pattern of which are randomized.

14. A radio communication method as set forth in any one of Claims 11 through 13, further comprising a step of repeating the pattern in which the slot length of transmission slots and reception slots is random and/or a pattern in which the repetition of transmission slots and reception slots is random.
